(19) Europäisches Patentamt / European Patent Office / Office européen des brevets

(11) **EP 1 930 810 A1**

(12) **EUROPÄISCHE PATENTANMELDUNG**

(43) Veröffentlichungstag:
**11.06.2008 Patentblatt 2008/24**

(51) Int Cl.:
***G06F 9/50*** *(2006.01)*

(21) Anmeldenummer: **06025418.2**

(22) Anmeldetag: **08.12.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK RS**

(71) Anmelder: **SIEMENS AKTIENGESELLSCHAFT**
**80333 München (DE)**

(72) Erfinder:
• **Bichler, Martin, Prof.**
  **85748 Garching (DE)**
• **Setzer, Thomas**
  **80687 München (DE)**
• **Speitkamp, Benjamin**
  **80799 München (DE)**

(54) **Bereitstellung von Ressourcen in einem Datenverarbeitungssystem für angeforderte Dienste**

(57) Zur Bereitstellung von Ressourcen in einem Datenverarbeitungssystem für angeforderte Dienste erfolgt die Bereitstellung der Ressourcen durch eine Vielzahl von Datenverarbeitungsanlagen ausgehend von einem Optimierungsproblem. Ressourcen für einen ausgewählten Dienst werden höchstens durch eine vorgebbare Teilmenge der Datenverarbeitungsanlagen bereitgestellt. Ressourcen für eine ausgewählte Gruppe von Diensten werden durch jeweils unterschiedliche einem Dienst zugeordnete Datenverarbeitungsanlagen bereitgestellt. Zwei Dienste mit zeitlich im wesentlichen komplementärem Ressourcenbedarf werden derselben Datenverarbeitungsanlage zugeordnet.

**FIG 2**

201 — Formulierung Bin-Packing-Optimierungsproblem

202 — Nebenbedingung: Teilmenge von max. $r$ Servern pro Dienst

203 — Nebenbedingung: für Dienste $j$ und $l$ unterschiedliche Server

204 — Ermittlung von Diensten mit komplementärem Ressourcenbedarf

205 — Zusammenfassung von Diensten mit komplementärem Ressourcenbedarf

EP 1 930 810 A1

Printed by Jouve, 75001 PARIS (FR)

**Beschreibung**

Die vorliegende Erfindung betrifft ein Verfahren und Steuerungsprogramm zur Bereitstellung von Ressourcen in einem Datenverarbeitungssystem für angeforderte Dienste sowie ein Verfahren und Steuerungsprogramm zur Verdichtung von Lastprognosewerten für ein Verfahren zur Bereitstellung von Ressourcen in einem Datenverarbeitungssystem.

Bisher werden Dienste wie ERP-Systemmodule, Datenbanken oder Web-Server in Rechenzentren dedizierten physikalischen Servern zugeordnet. Aufgrund komplexer Ressourcenanforderungen in Rechenzentren bzw. Datenverarbeitungssystemen mit einer Vielzahl von Datenverarbeitungsanlagen werden insbesondere im Hinblick auf Spitzenlastanforderungen Server mit hoher Kapazität verwendet. Dies führt jedoch dazu, dass die Server zeitlich sehr unterschiedlich ausgelastet sind. Insbesondere für schwach ausgelastete Server sind unverhältnismäßig hohe Anschaffungskosten und Betriebskosten erforderlich. Entsprechend einer Schätzung der Gartner Group (K. Parent, "Server Consolidation Improves IT's Capacity Utilization", Vol. 2006, Court Square Data Group, 2005) beträgt die durchschnittliche Serverauslastung in Unternehmen gerade 20%.

Zur Lösung von Problemen, die durch eine sehr ungleichmäßige Server-Auslastung bedingt sind, sind bereits zahlreiche Virtualisierungsansätze entwickelt worden, die auf eine verbesserte Serverauslastung abzielen. Server-Virtualisierung dient einer Bereitstellung von Servern, die sich aus Anwendersicht wie echte Server verhalten, in Wirklichkeit jedoch keine eigenständigen Server sind, sondern Instanzen übergeordneter Server als Gastgebersysteme. Üblicherweise residieren mehrere virtuelle Server auf einem Gastgebersystem. Auf diese Weise kann ein einzelner Server in mehrere virtuelle Server partitioniert werden. Xen, VMware oder Linux-VServer sind nur einige Beispiele für Produkte, die eine Server-Virtualisierung ermöglichen.

Eine Virtualisierung von Rechenzentrum ermöglicht darüber hinaus eine ganzheitliche Sicht über in einem Datenverarbeitungssystem zur Verfügung stehende Ressourcen unabhängig von deren physikalischer Zuordnung zu bestehenden Datenverarbeitungsanlagen. Dies lässt sich zur Migration von genutzten Diensten von einem Server zu einem anderen Server während der Laufzeit des Dienstes ausnutzen. Beispiele für Produkte im Bereich Virtualisierung von Rechenzentren sind Fujitsu-Siemens Flexframe oder SAP ACC (Adaptive Computing Controller).

Die Vorzüge der genannten Virtualisierungsansätze bestehen in höherem Serverauslastungsgraden, in einer einfacheren Systemverwaltung sowie insgesamt reduzierten Anschaffungs- und Betriebskosten. Jedoch besteht gerade bei stark schwankender Nachfrage nach Ressourcen eine besondere Herausforderung darin, für jeden Zeitpunkt und jeden angeforderten Dienst bedarfsgerecht Kapazität vorzuhalten.

Technologisch werden Virtualisierungsansätze durch eine Vielzahl von Lösungen unterstützt. Symmetrische Multiprozessor-Server (SMP-Server) können in eine Vielzahl von Subeinheiten unterteilt werden, wobei auf jeder Subeinheit ein eigenes Betriebssystem ablaufen kann. Derartige Ansätze sind auch unter dem Namen physikalische oder logische Hardware-Partitionierung bekannt. Beispiele für Produkte in diesem Umfeld sind HP nPAR oder IBM DLPAR.

Software-Virtualisierungsansätze zielen auf die Anwendungsebene, die Betriebssystemebene oder darunter liegende Ebenen ab. Bei einer Virtualisierung mittels Hypervisor wird virtuell ein zusätzliches Betriebssystem gestartet. Dabei wird jedoch keine Hardware virtualisiert oder emuliert, sondern die virtuell gestarteten Betriebssysteme verwenden eine abstrakte Verwaltungsschicht, um auf gemeinsame Ressourcen zuzugreifen. Beispiele für Hypervisor-Software sind Linux-VServer, Microsoft Virtual Server, Parallels, Quemu, VMware, und Xen. Insbesondere VMware erlaubt eine simultane Erzeugung und Ausführung mehrer virtueller Server. Dabei kann jede einzelne virtuelle Server-Instanz ein eigenes Gast-Betriebssystem wie Windows, Linux oder BSD ausführen.

Mit VMware ESX und VMware GSX stehen Lösungen für eine Virtualisierung von Rechenzentren bereit. Beide Lösungen unterstützen eine Verwaltung und Migration von virtuellen Maschinen über eine Vielzahl von physikalischen Servern. Da virtuelle Gast-Maschinen unabhängig von der tatsächlichen Hardware dieselben Hardware-Treiber benutzen, sind Instanzen von virtuellen Maschinen hochgradig portabel zwischen einzelnen Computersystemen. Beispielsweise kann eine virtuelle Maschine angehalten werden, auf einen anderen Rechner kopiert werden und dort fortgesetzt werden.

In ähnlicher Weise ermöglichen auch Produkte wie Fujitsu-Siemens Flexframe und SAP ACC eine Zuordnung von SAP-Anwendungsdiensten zu physikalischen Servern je nach Bedarf. Um die genannten Virtualisierungslösungen effizient nutzen zu können, sind leistungsfähige Verfahren zur Ressourcenverwaltung und zur automatischen Allokation von virtuellen Servern erforderlich.

Der vorliegenden Erfindung liegt die Aufgabe zugrunde, ein Verfahren zur Minimierung einer Anzahl zur Bereitstellung angeforderter Dienste erforderlicher Datenverarbeitungsanlagen sowie eine geeignete Implementierung des Verfahrens anzugeben.

Diese Aufgabe wird erfindungsgemäß durch ein Verfahren mit den in Anspruch 1 angegebenen Merkmalen, ein Verfahren mit den in Anspruch 10 angegebenen Merkmalen, ein Steuerungsprogramm mit den in Anspruch 11 angegebenen Merkmalen und ein Steuerungsprogramm mit den in Anspruch 1 angegebenen Merkmalen gelöst. Vorteilhafte Weiterbildungen sind in den abhängigen Ansprüchen angegeben.

Ein wesentlicher Aspekt der vorliegenden Erfindung ist, daß zur Bereitstellung von Ressourcen in einem Datenverarbeitungssystem für angeforderte Dienste die Bereitstellung der Ressourcen durch eine Vielzahl von Datenverarbeitungsanlagen ausgehend von einem Optimierungsproblem erfolgt. Ressourcen für einen ausgewählten Dienst werden höchstens durch eine vorgebbare Teilmenge der Datenverarbeitungsanlagen bereitgestellt. Außerdem werden Ressourcen für eine ausgewählte Gruppe von Diensten durch jeweils unterschiedliche einem Dienst zugeordnete Datenverarbeitungsanlagen bereitgestellt, beispielsweise aufgrund von Reaktions- oder Stabilitätsanforderungen. Zwei Dienste mit zeitlich im wesentlichen komplementärem Ressourcenbedarf werden derselben Datenverarbeitungsanlage zugeordnet. Hierdurch kann eine Glättung einer Server-auslastung erzielt werden, was sich wiederum positiv auf Systemstabilität und -leistung auswirkt.

Vorzugsweise erfolgt die Bereitstellung der Ressourcen ausgehend von einem Bin-Packing-Optimierungsproblem. Als Bin-Packing-Optimierungsproblem oder Behälterproblem wird ein kombinatorisches Optimierungsproblem bezeichnet, das auf der Fragestellung basiert, wie eine vorgegebene Anzahl von Objekten auf eine gegebene Anzahl von Behältern bzw. Ressourceneinheiten mit einer definierten Kapazität verteilt werden können, ohne daß die Kapazitätsgrenze einer der Ressourceneinheiten überschritten wird.

Eine Zuordnung von Ressourcen anfordernden Diensten zu Ressourcen bereitstellenden Datenverarbeitungsanlagen erfolgt vorteilhafterweise dynamisch, und eine Anzahl von Veränderungen der Zuordnung eines Dienstes zu einer Datenverarbeitungsanlage wird auf einen vorgebbaren Wert begrenzt. Dies ermöglicht eine angemessene Berücksichtigung einer zeitlich variierenden Kapazität bereitstellbarer Ressourcen und / oder zeitlich variierender Ressourcenanforderungen, ohne daß dies zu übermäßigen, nachteiligen Neuzuordnungen von Diensten zu Servern führt. De Anzahl von Veränderungen der Zuordnung eines Dienstes zu einer Datenverarbeitungsanlage kann beispielsweise auf einen vorgebbaren Wert je Zeitintervall begrenzt werden.

Entsprechend einer bevorzugten Weiterbildung der vorliegenden Erfindung erfolgt eine erneute Zuordnung von Diensten zu Datenverarbeitungsanlagen innerhalb vorgebbarer Zeitintervalle und/oder bei Unter- oder Überschreiten vorgebbarer Schwellwerte und/oder bei Eintritt vorgebbarer Ereignisse. Derartige Ereignisse sind beispielsweise Ausfälle von Datenverarbeitungsanlage, Veränderungen einer Kapazität einer Ressource oder Veränderungen einer Ressourcennachfrage.

Vorteilhafterweise wird eine Abweichung einer Auslastung einer Datenverarbeitungsanlage von einer durchschnittlichen Auslastung mehrerer Datenverarbeitungsanlagen auf einen vorgebbaren Wert begrenzt. Hierdurch kann beispielsweise vermieden werden, daß bestimmte Datenverarbeitungsanlagen an einer Auslastungsgrenze betrieben werden, während andere Datenverarbeitungsanlagen nur schwach ausgelastet sind. Damit lassen sich kritische Betriebszustände bereits präventiv vermeiden.

Ein weiterer Aspekt der vorliegenden Erfindung liegt darin, daß zur Verdichtung von einen Ressourcenbedarf beschreibenden Lastprognosewerten eine Periodizität und/oder eine einen Trend beschreibende Veränderung des Ressourcenbedarfs ermittelt wird. Außerdem werden mehrere sich innerhalb eines vorgebbaren Zeit- und/oder Werteintervalls befindende Lastprognosewerte zu einem resultierenden Lastprognosewert verdichtet.

Die vorliegende Erfindung wird nachfolgend an einem Ausführungsbeispiel anhand der Zeichnung näher erläutert. Es zeigt

Figur 1     eine schematische Darstellung eines Anwendungsszenarios der vorliegenden Erfindung,

Figur 2     ein Ablaufdiagramm für ein Verfahren zur Bereitstellung von Ressourcen in einem Datenverarbeitungssystem für angeforderte Dienste,

Figur 3     ein Ablaufdiagramm für ein Verfahren zur Verdichtung von Lastprognosewerten für ein Verfahren gemäß Figur 2.

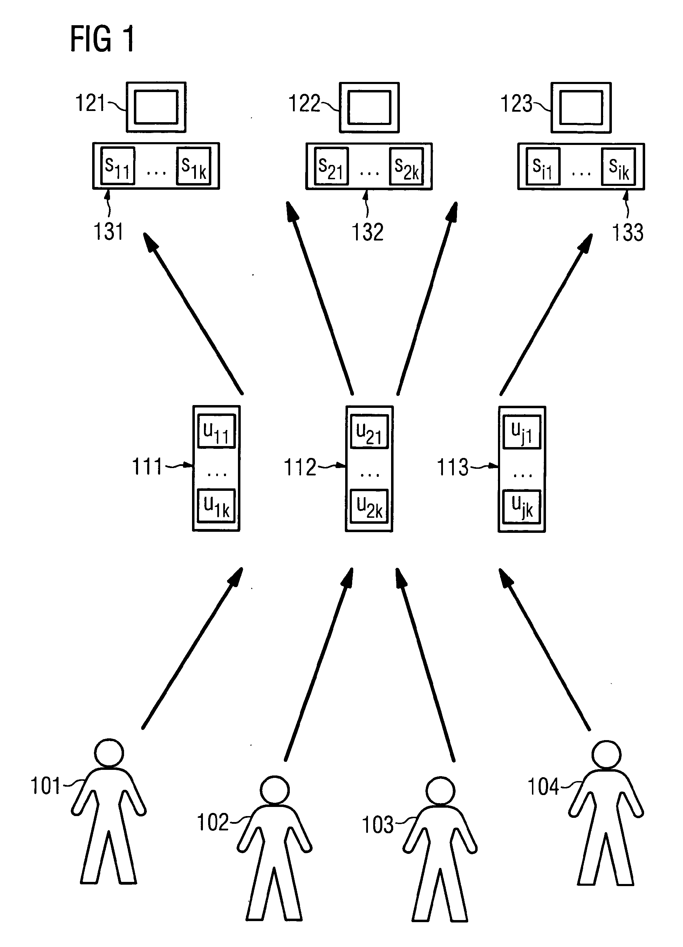

In Figur 1 ist ein Anwendungsszenario der vorliegenden Erfindung mit mehreren Servern 121 bis 123 dargestellt, die Ressourcen 131 bis 133 für durch Benutzer 101 bis 104 angeforderte Dienste 111 bis 113 bereitstellen. Im Rahmen eines statischen Server-Allokationsproblems (SSAP) besteht die Aufgabe darin, Dienste 111 bis 113 zu physikalischen Servern 121 bis 123 zuzuordnen und dabei die Anzahl der benötigten Server zu minimieren. Auf diese Weise können die mit einem Server-Einsatz verbundenen Kosten minimiert werden.

Dabei wird davon ausgegangen, dass n Dienste $j \in J$ von m Servern $i \in I$ bereitzustellen sind. Zur Vereinfachung wird angenommen, dass kein Dienst mehr Kapazität einer Ressource beansprucht als von einem einzelnen Server bereitgestellt werden kann. Für eine Diensterbringung sind unterschiedliche Arten von Ressourcen $k \in K$ erforderlich, beispielsweise CPU-Leistung, Speicher oder Bandbreite. Weiter wird angenommen, dass die Benutzer 101 bis 104 $u_{jk}$ Einheiten einer Ressource k anfordern. Beispiele für derartige Ressourceneinheiten sind SAPS - SAP Application Performance Standard, HP Computones oder Megabyte. Jeder Server i verfügt über eine vorgegebene Kapazität $S_{ik}$ einer Ressource k. Aus Sicherheitsgründen sollte $s_{ik}$ ein physikalisches Kapazitätslimit der jeweiligen Ressource nicht über-

steigen. $y_i$ ist eine binäre Entscheidungsvariable, die eine Nutzung oder Nichtbenutzung eines Servers i beschreibt. $c_i$ gibt die mit einem Server-Einsatz verbundenen Kosten wieder, während $x_{ij}$ beschreibt, welcher Dienst j von welchem Server i bereitgestellt wird. $x_{ij}$ ist ebenfalls eine binäre Entscheidungsvariable.

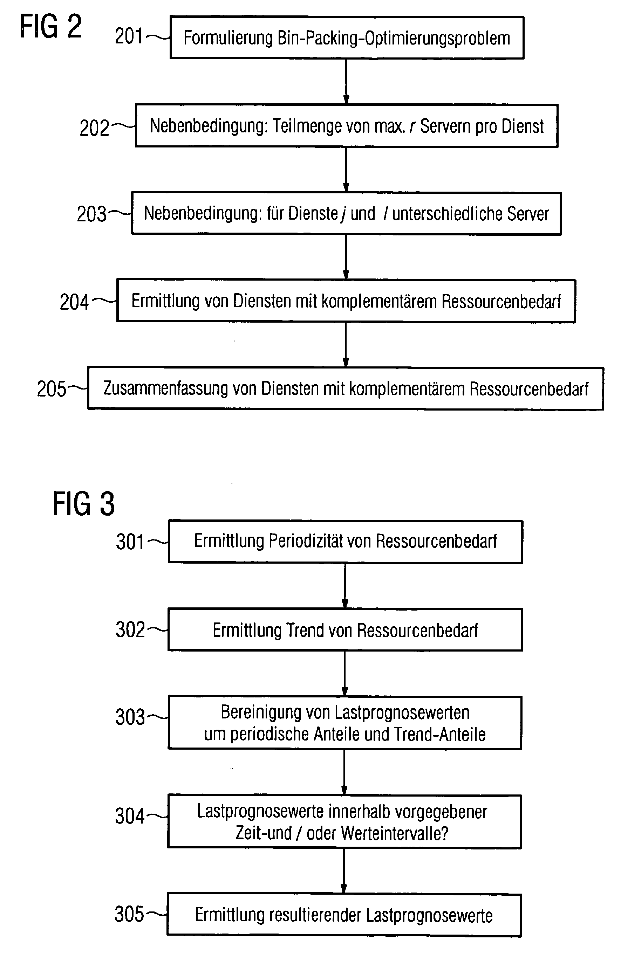

Mit diesen Festlegungen kann ein Bin-Packing-Optimierungsproblem als Ausgangspunkt für das in Figur 2 veranschaulichte Verfahren zur Bereitstellung von Ressourcen in einem Datenverarbeitungssystem entsprechend nachstehendem Optimierungsansatz formuliert werden (Schritt 201).

$$\min \sum_{i=1}^{m} c_i y_i$$

$$s.t.$$

$$\sum_{i=1}^{m} x_{ij} = 1 \qquad \forall j \in J \qquad (1)$$

$$\sum_{j=1}^{n} u_{jk} x_{ij} \leq s_{ik} y_i \qquad \forall i \in I, \forall k \in K$$

$$y_i, x_{ij} \in \{0,1\} \qquad \forall j \in J, \forall i \in I$$

Ein Bin-Packing-Optimierungsproblem kann beispielsweise mit dem First-Fit-Decreasing-Algorithmus gelöst werden. Dabei werden die zu verteilenden Objekte bzw. Ressourcenanforderungen entsprechend ihrer Größe absteigend sortiert. Die sortierten Objekte werden dann aufeinanderfolgend dem ersten freien Behälter bzw. Server zugeordnet, in den sie passen.

Der First-Fit-Decreasing-Algorithmus weist die Komplexitätsordnung O(n log n) auf.

Zusätzlich zu den obigen Nebenbedingungen dürfen aufgrund technischer Randbedingungen Ressourcen für einen ausgewählten Dienst j höchstens durch eine vorgebbare Teilmenge von r Servern bereitgestellt werden (Schritt 202).

$$\sum_{i=1}^{r} x_{ij} = 1 \qquad (2)$$

Nebenbedingung (2) kann für weitere Dienste formuliert und angepaßt werden.

Darüber hinaus dürfen Ressourcen für eine ausgewählte Gruppe von Diensten, beispielsweise zwei Dienste j und l, nur durch jeweils unterschiedliche einem Dienst zugeordnete Server bereitgestellt werden (Schritt 203). Dies bedeutet für das vorliegende Beispiel, dass die Dienste j und l nicht von ein-und demselben Server bereitgestellt werden dürfen.

$$x_{ij} + x_{il} \leq 1 \qquad \forall i \in I \qquad (3)$$

Da bei bestehenden Virtualisierungslösungen untere und obere Kapazitätsgrenzen spezifizierbar sind, können Kapazitäten einer Ressource innerhalb eines solchen Intervalls für eine Vielzahl von Diensten verfügbar gemacht werden. Dadurch wird eine gemeinsame Ressourcennutzung ermöglicht. Daher werden in einem nächsten Schritt des in Figur 2 veranschaulichten Verfahrens Dienste mit zeitlich im wesentlichen zueinander komplementärem Ressourcenbedarf ermittelt (Schritt 204) und anschließend ggf. demselben Server zugeordnet (Schritt 205). Beispielsweise kann ein Ressourcenbedarf einen über Tage oder Wochen zyklischen Verlauf aufweisen, der antizyklisch zu einem anderen Ressourcenbedarf verläuft.

Bei Berücksichtigung einer Zeitabhängigkeit der Ressourcenanforderungen $U_{jkt}$, wobei $t = \{1, ..., \tau\}$ diskrete Zeitintervalle von frei wählbarer Dauer bezeichnet, kann der Optimierungsansatz (1) für ein statisches Server-Allokationsproblem mit variabler Last (SSAPv) umformuliert werden. Auf diese Weise ergibt sich nachstehender Optimierungsansatz.

$$\min \sum_{i=1}^{m} c_i y_i$$

$$s.t.$$

$$\sum_{i=1}^{m} x_{ij} = 1 \qquad \forall j \in J \qquad\qquad (4)$$

$$\sum_{j=1}^{n} u_{jkt} x_{ij} \le s_{ik} y_i \qquad \forall i \in I, \forall k \in K, \forall t \in \tau$$

$$y_i, x_{ij} \in \{0,1\} \qquad \forall j \in J, \forall i \in I$$

Eine Virtualisierung von Rechenzentren erlaubt eine Migration von Diensten von einem Server zu einem anderen Server. Im Rahmen eines dynamischen Server-Allokationsproblems (DSAP) wird untersucht, wie viele Server innerhalb einer betrachteten Planungsperiode benötigt werden, und wie viele Dienste den einzelnen Servern innerhalb einzelner Zeitintervalle zugeordnet werden. Unter dieser Annahme wird der Optimierungsansatz (1) in den nachstehenden Optimierungsansatz überführt.

$$\min \sum_{i=1}^{m} c_i y_i$$

$$s.t.$$

$$\sum_{i=1}^{m} x_{ijt} = 1 \qquad \forall j \in J, \forall t \in T \qquad\qquad (5)$$

$$\sum_{j=1}^{n} u_{jkt} x_{ijt} \le s_{ik} y_i \qquad \forall i \in I, \forall k \in K, \forall t \in T$$

$$x_{ijt}, y_i \in \{0,1\} \qquad \forall i \in I, \forall j \in J, \forall t \in T$$

Als zusätzliche Nebenbedingung kann berücksichtigt werden, dass eine Anzahl von Re-Allokationen eines Dienstes j in bezug auf einen Server i auf einen vorgebbaren Wert $z_{ijt}$ begrenzt wird. Dabei stellt $z_{ijt}$ eine binäre Entscheidungsvariable dar, bei der jede Re-Allokation doppelt gezählt wird. Die Gesamtzahl der zulässigen Re-Allokationen kann dabei für ein betrachtetes Zeitintervall auf p begrenzt werden. Die zusätzlichen Nebenbedingungen ergeben sich entsprechend dem nachstehenden Ausdruck.

$$x_{ijt} - x_{ijt-1} \le z_{ijt} \qquad \forall i \in I, \forall j \in J, \forall t \in \{2,...,\tau\}$$

$$x_{ijt-1} - x_{ijt} \le z_{ijt} \qquad \forall i \in I, \forall j \in J, \forall t \in \{2,...,\tau\}$$

$$\sum_{i=1}^{m} \sum_{j=1}^{n} \sum_{t=2}^{\tau} z_{ijt} \le 2p \qquad\qquad (6)$$

$$z_{ijt} \in \{0,1\} \qquad \forall i \in I, \forall j \in J, \forall t \in T$$

Aufgrund der Zeitabhängigkeit der binären Entscheidungsvariablen $z_{ijt}$ kann ein Systemadministrator eine zulässige Anzahl von Re-Allokationen für ein betrachtetes Zeitintervall spezifizieren. Für Szenarien, bei denen ein einzelner Dienst mehr Kapazitäten einer Ressource beansprucht als von einem einzelnen Server bereitgestellt werden kann, wird ein Dienst mit hohem Ressourcenbedarf in eine Vielzahl von Diensten mit geringerem Ressourcenbedarf aufgeteilt. Auf diese Weise können zufriedenstellende Ergebnisse für die meisten praktischen Anforderungen erzielt werden.

In den obigen Optimierungsansätzen können noch zusätzliche Nebenbedingungen berücksichtigt werden. Beispielsweise kann eine Anforderung darin bestehen, dass die Server-Auslastung über sämtliche betrachtete Server eines Rechenzentrums möglichst gleichverteilt ist. Diese Randbedingung wird im Rahmen eines Dynamic-Server-Balancing-Problems (DSBP) aufgegriffen. Zur Vereinfachung wird dabei angenommen, dass sämtliche Server eine identische Kapazität $s_k$ der Ressource k aufweisen. Diese Annahme ist beispielsweise innerhalb eines Racks eines Blade-Servers erfüllt. Die Formulierung eines Dynamic-Server-Balancing-Problems kann beispielsweise durch den nachste-

henden Optimierungsansatz erfolgen.

$$\min \omega_1 \sum_{j=1}^{n} \sum_{t=1}^{\tau} (d_{jt-} + d_{jt+}) + \omega_2 \sum_{i=1}^{m} \sum_{j=1}^{n} \sum_{t=2}^{\tau} z_{ijt}$$

$$s.t.$$

$$\sum_{i=1}^{m} x_{ijt} = 1 \qquad\qquad \forall j \in J, \forall t \in T$$

$$\sum_{j=1}^{n} u_{jkt} x_{ijt} \leq s_k \qquad\qquad \forall i \in I, \forall k \in K, \forall t \in T$$

$$\sum_{j=1}^{n} u_{jkt} x_{ijt} + d_{jt-} - d_{jt+} = \frac{1}{m} \sum_{j=1}^{n} u_{jkt} \qquad \forall i \in I, \forall t \in T, \underline{k \in K} \qquad\qquad (7)$$

$$x_{ijt} - x_{ijt-1} \leq z_{ijt} \qquad\qquad \forall i \in I, \forall j \in J, \forall t \in \{2,...,\tau\}$$

$$x_{ijt-1} - x_{ijt} \leq z_{ijt} \qquad\qquad \forall i \in I, \forall j \in J, \forall t \in \{2,...,\tau\}$$

$$z_{ijt}, x_{ijt} \in \{0,1\} \qquad\qquad \forall i \in I, \forall j \in J, \forall t \in T$$

$$d_{jt-}, d_{jt+} \geq 0 \qquad\qquad \forall j \in J, \forall t \in T$$

Die dritte Nebenbedingung in Optimierungsansatz (7) beschreibt eine Abweichung einer realen Lastverteilung von einer idealen Lastverteilung, bei der die Serverauslastung für sämtliche Server eines Rechenzentrums innerhalb eines betrachteten Zeitintervalls gleich ist. Die Variablen $d_{ij-}$ und $d_{ij+}$ geben dabei die jeweilige negative bzw. positive Abweichung von der idealen Lastverteilung an.

In Fällen mit mehreren unterschiedlichen Ressourcenarten kann jede einzelne Ressourcenart für eine gleichverteilte Ressourcen-Allokation separat betrachtet werden. Die binären Entscheidungsvariablen $z_{ijt}$ spezifizieren auch im Optimierungsansatz (7) den zweifachen Betrag der Re-Allokationen. Durch Spezifizierung von Gewichten $\omega_1$ und $\omega_2$ kann ein Systemadministrator Schwerpunkt bezüglich einer möglichst gleichmäßigen Lastverteilung oder hinsichtlich einer möglichst geringen Anzahl von Re-Allokationen setzen.

In die obigen Optimierungsansätze gehen Prognosen für Ressourcenanforderungen $u_{jkt}$ ein, die auf einer historischen oder prognostizierten Nachfrage beruhen. Mittels entsprechender Systemüberwachungswerkzeuge kann ermittelt werden, ob die tatsächlichen Ressourcenanforderungen signifikant von den prognostizierten Ressourcenanforderungen abweichen. Bei signifikanten Abweichungen von den Prognosewerten können neue Bedarfsvorhersagen gemacht werden und diese in eine Re-Optimierung einbezogen werden.

Die Anzahl der in den obigen Optimierungsansätzen berücksichtigten Zeitintervalle $\tau$ beeinflusst direkt die Anzahl der Variablen innerhalb der Optimierungsmodelle. Aus diesem Grund sollten die Lastprognosewerte im Sinne einer handhabbaren Komplexität der Optimierungsmodelle vorverarbeitet werden.

Ein Verfahren zur Verdichtung von Lastprognosewerten ist in Figur 3 veranschaulicht. Zunächst wird eine Periodizität eines Ressourcenbedarfs (Schritt 301) und eine einen Trend beschreibende Veränderung des Ressourcenbedarfs (Schritt 302) zur Verdichtung von den Ressourcenbedarf beschreibenden Lastprognosewerten ermittelt. Nach der Ermittlung der Periodizität und des Trends werden die Lastprognosewerte um periodische Anteile bzw. Trend-Anteile im Sinne einer Datenverdichtung bereinigt (Schritt 303). Nachfolgend wird ermittelt, ob sich mehrere Lastprognosewerte innerhalb eines vorgegebenen Zeit- bzw. Werteintervalls befinden (Schritt 304). Sollte dies der Fall sein, so werden mehrere Lastprognosewerte zu einem resultierenden Lastprognosewert verdichtet (Schritt 305).

In der Praxis zeigen die meisten Lastprognosewerte einen periodischen Verlauf mit einer Periode $\tau'$. Damit gilt $u_{jkt} \approx U_{jk(q*\tau'+t)}$, $q \in \{1, 2, 3, ...\}$. Unter der Annahme das p die Anzahl der Zeitintervalle bezeichnet, für die Lastprognosewerte erfasst sind, lässt sich die Menge der Lastprognosewerte $U_{jkt}$ entsprechend dem nachstehenden Ausdruck definieren.

$$U_{jkt} = \bigcup_{q=0}^{p-1} u_{jk(q\cdot\tau'+t)} \qquad \forall j \in J, \forall k \in K, \forall t \in \{1,...,\tau'\} \qquad\qquad (8)$$

Falls Lastprognosewerte mehrfach periodische Anteile aufweisen, beispielsweise tägliche, wöchentliche oder monatliche Wiederholungen eines Lastmuters, kann das Produkt der einzelnen Perioden als Periode τ' in obiger Gleichung verwendet werden.

Mittels linearer Regression kann für jede Ressource k ein Trend ermittelt werden, der beispielsweise eine stetige Zu-oder Abnahme des Ressourcenbedarfs kennzeichnet. Ein solcher Trendanteil kann beispielsweise durch Faltung der Lastprognosewerte mit dem ermittelten Trend aus den Lastprognosewerten eliminiert werden. Anschließend können nachfolgend beschriebene weitere Verdichtungsschritte vorgenommen werden, nach deren Abschluß den verdichteten Lastprognosewerten eine Trendkomponente entsprechend einer zu spezifizierenden Planungsperiode zur Optimierungsproblemlösung wieder hinzugefügt wird.

Eine weitere Verdichtung der Lastprognosewerte kann erzielt werden, indem zusammenhängende Mengen $U_{jkt}$ zu resultierenden Mengen zusammengefasst werden, die größere Zeitintervalle spezifizieren. Beispielsweise können mit zwölf 5-Minuten-Intervalle zu einem resultierenden 1-Stunden-Intervall zusammengefasst werden. Eine Aggregation von Lastprognosewerten im Zeitbereich wird durch den nachstehenden Ausdruck beschrieben.

$$U'_{jkt'} = \bigcup_{q=1}^{w} U_{jk(w \cdot t + q)} \qquad \forall j \in J, \forall k \in K$$

$$\forall t \in \{0,1,2,...,\left\lfloor p/w \right\rfloor - 1\} \qquad (9)$$

Eine weitere Verdichtung der Lastprognosewerte kann erzielt werden, indem für die Lastprognosewerte eine definierte Perzentile oder Quantile einer Lastprognosewertverteilung zur Datenverdichtung vorgegeben wird. Alle innerhalb einer spezifizierten Perzentile oder Quantile liegenden Lastprognosewerte werden zu einem resultierenden Lastprognosewert verdichtet. Beispielsweise kann eine Quantile von 0,95 spezifiziert werden, wodurch eine Genauigkeit des prognostizierten Ressourcenbedarfs von ungefähr 95% abgebildet werden kann.

Die vorangehend beschriebenen Verfahren zur Bereitstellung von Ressourcen in einem Datenverarbeitungssystem für angeforderte Dienste und zur Verdichtung von Lastprognosewerten für ein solches Verfahren werden durch Steuerungsprogramme implementiert, die in einen Arbeitsspeicher eines Servers ladbar sind und jeweils zumindest einen Codeabschnitt aufweisen, bei dessen Ausführung die vorangehend beschriebenen Schritte ausgeführt werden, wenn das jeweilige Steuerungsprogramm im Server abläuft.

Die Anwendung der vorliegenden Erfindung ist nicht auf das hier beschriebene Ausführungsbeispiel beschränkt.

**Patentansprüche**

1. Verfahren zur Bereitstellung von Ressourcen in einem Datenverarbeitungssystem für angeforderte Dienste, bei dem

   - die Bereitstellung der Ressourcen durch eine Vielzahl von Datenverarbeitungsanlagen ausgehend von einem Optimierungsproblem erfolgt,
   - Ressourcen für einen ausgewählten Dienst höchstens durch eine vorgebbare Teilmenge der Datenverarbeitungsanlagen bereitgestellt werden,
   - Ressourcen für eine ausgewählte Gruppe von Diensten durch jeweils unterschiedliche einem Dienst zugeordnete Datenverarbeitungsanlagen bereitgestellt werden,
   - zwei Dienste mit zeitlich im wesentlichen komplementärem Ressourcenbedarf derselben Datenverarbeitungsanlage zugeordnet werden.

2. Verfahren nach Anspruch 1,
   bei dem die Bereitstellung der Ressourcen ausgehend von einem Bin-Packing-Optimierungsproblem erfolgt.

3. Verfahren nach Anspruch 1 oder 2,
   bei dem eine Kapazität bereitstellbarer Ressourcen zeitvariant ist.

4. Verfahren nach einem der Ansprüche 1 bis 3,
   bei dem eine Zuordnung von Ressourcen anfordernden Diensten zu Ressourcen bereitstellenden Datenverarbeitungsanlagen dynamisch erfolgt, und bei dem eine Anzahl von Veränderungen der Zuordnung eines Dienstes zu einer Datenverarbeitungsanlage auf einen vorgebbaren Wert begrenzt wird.

**5.** Verfahren nach Anspruch 4,
bei dem die Anzahl von Veränderungen der Zuordnung eines Dienstes zu einer Datenverarbeitungsanlage auf einen vorgebbaren Wert je Zeitintervall begrenzt wird.

**6.** Verfahren nach einem der Ansprüche 4 oder 5,
bei dem die Zuordnung von Diensten zu Datenverarbeitungsanlagen innerhalb vorgebbarer Zeitintervalle und/oder bei Unter-oder Überschreiten vorgebbarer Schwellwerte und/oder bei Eintritt vorgebbarer Ereignisse erneut erfolgt.

**7.** Verfahren nach Anspruch 6,
bei dem die Zuordnung von Diensten zu Datenverarbeitungsanlagen bei Ausfall einer Datenverarbeitungsanlage und/oder bei Veränderung einer Kapazität einer Ressource erneut erfolgt.

**8.** Verfahren nach einem der Ansprüche 1 bis 7,
bei dem eine Abweichung einer Auslastung einer Datenverarbeitungsanlage von einer durchschnittlichen Auslastung mehrerer Datenverarbeitungsanlagen auf einen vorgebbaren Wert begrenzt wird.

**9.** Verfahren nach einem der Ansprüche 1 bis 8,
bei dem eine Periodizität und/oder eine einen Trend beschreibende Veränderung eines Ressourcenbedarfs zur Verdichtung von den Ressourcenbedarf beschreibenden Lastprognosewerten ermittelt wird, bei dem mehrere sich innerhalb eines vorgebbaren Zeit- und/oder Werteintervalls befindende Lastprognosewerte zu einem resultierenden Lastprognosewert verdichtet werden.

**10.** Verfahren zur Verdichtung von Lastprognosewerten für ein Verfahren zur Bereitstellung von Ressourcen in einem Datenverarbeitungssystem, bei dem

- eine Periodizität und/oder eine einen Trend beschreibende Veränderung eines Ressourcenbedarfs zur Verdichtung von den Ressourcenbedarf beschreibenden Lastprognosewerten ermittelt wird,
- mehrere sich innerhalb eines vorgebbaren Zeit- und/oder Werteintervalls befindende Lastprognosewerte zu einem resultierenden Lastprognosewert verdichtet werden.

**11.** Steuerungsprogramm zur Bereitstellung von Ressourcen in einem Datenverarbeitungssystem für angeforderte Dienste, das in einen Arbeitsspeicher einer Datenverarbeitungsanlage ladbar ist und zumindest einen Codeabschnitt aufweist, bei dessen Ausführung

- die Bereitstellung der Ressourcen durch eine Vielzahl von Datenverarbeitungsanlagen ausgehend von einem Optimierungsproblem erfolgt,
- Ressourcen für einen ausgewählten Dienst höchstens durch eine vorgebbare Teilmenge der Datenverarbeitungsanlagen bereitgestellt werden,
- Ressourcen für eine ausgewählte Gruppe von Diensten durch jeweils unterschiedliche einem Dienst zugeordnete Datenverarbeitungsanlagen bereitgestellt werden,
- zwei Dienste mit zeitlich im wesentlichen komplementärem Ressourcenbedarf derselben Datenverarbeitungsanlage zugeordnet werden,

wenn das Steuerungsprogramm in der Datenverarbeitungsanlage abläuft.

**12.** Steuerungsprogramm zur Verdichtung von Lastprognosewerten für ein Verfahren zur Bereitstellung von Ressourcen in einem Datenverarbeitungssystem, das in einen Arbeitsspeicher einer Datenverarbeitungsanlage ladbar ist und zumindest einen Codeabschnitt aufweist, bei dessen Ausführung

- eine Periodizität und/oder eine einen Trend beschreibende Veränderung eines Ressourcenbedarfs zur Verdichtung von den Ressourcenbedarf beschreibenden Lastprognosewerten ermittelt wird,
- mehrere sich innerhalb eines vorgebbaren Zeit- und/oder Werteintervalls befindende Lastprognosewerte zu einem resultierenden Lastprognosewert verdichtet werden,

wenn das Steuerungsprogramm in der Datenverarbeitungsanlage abläuft.

## FIG 1

**FIG 2**

201 — Formulierung Bin-Packing-Optimierungsproblem

202 — Nebenbedingung: Teilmenge von max. $r$ Servern pro Dienst

203 — Nebenbedingung: für Dienste $j$ und $l$ unterschiedliche Server

204 — Ermittlung von Diensten mit komplementärem Ressourcenbedarf

205 — Zusammenfassung von Diensten mit komplementärem Ressourcenbedarf

**FIG 3**

301 — Ermittlung Periodizität von Ressourcenbedarf

302 — Ermittlung Trend von Ressourcenbedarf

303 — Bereinigung von Lastprognosewerten um periodische Anteile und Trend-Anteile

304 — Lastprognosewerte innerhalb vorgegebener Zeit-und / oder Werteintervalle?

305 — Ermittlung resultierender Lastprognosewerte

**Europäisches Patentamt**

**EUROPÄISCHER RECHERCHENBERICHT**

Nummer der Anmeldung

EP 06 02 5418

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SHAHABUDDIN J; CHRUNGOO A; GUPTA V; JUNEJA S; KAPOOR S; KUMAR A: "Stream-packing: resource allocation in web server farms with a QoS guarantee" HIGH PERFORMANCE COMPUTING - HIPC 2001. 8TH INTERNATIONAL CONFERENCE. PROCEEDINGS (LECTURE NOTES IN COMPUTER SCIENCE VOL.2238), Bd. 2238, Dezember 2001 (2001-12), Seiten 182-191, XP002427406 Berlin, Germany ISBN: 3-540-43009-1 | 1,2,11 | INV. G06F9/50 |
| Y | * das ganze Dokument * | 3-9 | |
| X | ABHISHEK CHANDRA; WEIBO GONGT; PRASHANT SHENOY: "Dynamic resource allocation for shared data centers using online measurements" QUALITY OF SERVICE IWQOS 2003, 11TH INTERNATIONAL WORKSHOP, BERKELEY, CA, USA, JUNE 2-4, 2003. PROCEEDINGS, Bd. 2707, Juni 2003 (2003-06), Seiten 381-398, XP002427407 | 10,12 | |
| Y | * das ganze Dokument * | 3-7,9 | RECHERCHIERTE SACHGEBIETE (IPC) G06F H04L |
| Y | EP 1 533 699 A (SAP AG [DE]) 25. Mai 2005 (2005-05-25) | 8 | |
| A | * Absatz [0024] - Absatz [0036]; Abbildung 2 * * Absatz [0056] - Absatz [0071]; Abbildung 18 * * Abbildung 19 * * Abbildung 20 * | 1,2,4,6,11 | |

-/--

Der vorliegende Recherchenbericht wurde für alle Patentansprüche erstellt

| Recherchenort | Abschlußdatum der Recherche | Prüfer |
|---|---|---|
| Den Haag | 30. März 2007 | Kielhöfer, Patrick |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................
& : Mitglied der gleichen Patentfamilie, übereinstimmendes Dokument

EPO FORM 1503 03.82 (P04C03)

**Europäisches Patentamt**

**EUROPÄISCHER RECHERCHENBERICHT**

Nummer der Anmeldung

EP 06 02 5418

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | SCHEUERMANN P ET AL: "DATA PARTITIONING AND LOAD BALANCING IN PARALLEL DISK SYSTEMS" VLDB JOURNAL, SPRINGER VERLAG, BERLIN, DE, Bd. 7, Februar 1998 (1998-02), Seiten 48-66, XP000856092 ISSN: 1066-8888 * das ganze Dokument * ----- | 1-12 | |
| A | COFFMAN E G ET AL: "APPROXIMATION ALGORITHMS FOR BIN PACKINGA SURVEY" APPROXIMATION ALGORITHMS FOR NP-HARD PROBLEMS, 1996, Seiten 1-53, XP002285343 * das ganze Dokument * ----- | 1-8,11 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 30. März 2007 | Kielhöfer, Patrick |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................................................
& : Mitglied der gleichen Patentfamilie, übereinstimmendes Dokument

EPO FORM 1503 03.82 (P04C03)

**EP 1 930 810 A1**

**ANHANG ZUM EUROPÄISCHEN RECHERCHENBERICHT**
**ÜBER DIE EUROPÄISCHE PATENTANMELDUNG NR.**

EP 06 02 5418

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-03-2007

| Im Recherchenbericht angeführtes Patentdokument | Datum der Veröffentlichung | Mitglied(er) der Patentfamilie | Datum der Veröffentlichung |
|---|---|---|---|
| EP 1533699 A | 25-05-2005 | WO 2005055059 A1 | 16-06-2005 |
| | | US 2007043865 A1 | 22-02-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **K. PARENT.** Server Consolidation Improves IT's Capacity Utilization. Court Square Data Group, 2005, vol. 2006